# EUROPEAN PATENT APPLICATION

(11) **EP 4 163 265 A1**
(43) Date of publication of application: **12.04.2023**
(21) Application number: 21201836.0
(22) Date of filing: 11.10.2021
(51) Int. Cl.: C04B 35/634, C04B 35/468, C04B 35/626

(54) **USE OF ETHYLENE VINYL ACETALS AS BINDER IN CERAMIC GREEN SHEETS**

(71) Applicant: Kuraray Europe GmbH, 65795 Hattersheim (DE)
(72) Inventor: Frank, Michael, 55268 Nieder-Olm (DE); Mummy, Florian, 60325 Frankfurt am Main (DE); Becker, Greta, 55122 Mainz (DE)
(74) Representative: Janßen, Christian Oliver

(57) **Abstract**

The invention is directed to the use of certain ethylene vinyl acetals as binders in printing inks. Use of an ethylene vinyl acetal as a binder for the production of a ceramic green sheet or a ceramic moulded body wherein the ethylene vinyl acetal comprises ethylene units in the range of 25 to 60 mol%. A suspension composition comprising one or more inorganic pigments, one or more organic solvents, one or more binders, one or more plasticizers, and one or more dispersing agents, wherein the binder is an ethylene vinyl acetal comprising ethylene units in the range of 25 to 60 mol%.

## Description

The invention is directed to the use of ethylene vinyl acetals as binder in ceramic green sheets.

Ceramic materials like ceramic capacitors for the electronics industry are generally produced by sintering of a so-called green sheet, i.e. a film-like, thin moulded body, which contains the ceramic materials. For the production of these green sheets, a suspension of metal oxides, plasticizers, dispersing agents and binders in organic solvents is produced. This suspension is subsequently applied by means of a suitable process (i.e. doctor blade process) in the desired thickness onto a carrier film and the solvent is removed. The green sheet thus obtained must be free from cracks, exhibit a smooth surface and still have a certain elasticity.

Polyvinyl acetals such as polyvinyl butyral are frequently used as binders for the production of ceramic green sheets. To this end, DE 4 003 198 A1 describes the production of a casting slip for ceramic green films in which polyvinyl butyral with a residual polyvinyl acetate content of 0 to 2% by weight is used as binder.

In recent years, multi-layer ceramic capacitors (MLCC) are becoming increasingly important for the electronics industry. MLCCs consist of a number of individual capacitors stacked together in parallel and contacted via the terminal surfaces. Due to the advancing miniaturization of the electronic components, the size of the powder particles can be as small as 10 nm. Hence, the production demands an increased accuracy of the ceramic sheets used therein. Additionally, the multi-layer stacks of ceramic green sheets are often wound up to a roll in the production process. To avoid delamination, the individual green sheets must possess superior properties with respect to binding and elongation-at-break. To this end, there is a need in the industry for further improved binders to be used in the suspensions.

Accordingly, one objective of the invention was to provide binders for ceramic green sheets leading improved adhesion, improved elongation-at-break, improved dispersion effect, an improved environmental and safety impact and/or with a better economical profile in the production and use of the ceramic green sheet.

It has been found that these and other certain ethylene vinyl acetals are highly suitable as binders for the production of ceramic suspensions and consequently for the production of ceramic green sheets.

Accordingly, the present invention concerns the use of an ethylene vinyl acetal as a binder for the production of a ceramic green sheet or a ceramic moulded body wherein the ethylene vinyl acetal comprises ethylene units in the range of 25 to 60 mol%.

The ethylene vinyl acetal of the present invention can be obtained by subjecting an aldehyde to an acetalization reaction with an ethylene vinyl alcohol (EVOH). Such ethylene vinyl alcohols are known in the art and can be obtained by copolymerizing ethylene in the presence of an acidic catalyst. Furthermore, ethylene vinyl alcohols are commercially available.

Preferably, the ethylene vinyl alcohol is obtained by copolymerizing ethylene and a vinyl acetate and hydrolysing the obtained copolymer. In the hydrolysation reaction, a conventionally known alkali catalyst or an acid catalyst can be used and among them, a hydrolysation reaction using methanol as a solvent and caustic soda (NaOH) catalyst is convenient.

Preferably, the percentage of ethylene units in the ethylene vinyl alcohol is 25 to 60 mol%, more preferably 30 to 55 mol%, and still more preferably 35 to 50 mol%.

The reaction product obtained after the acetalization reaction is neutralized with alkali, and then washed with water to obtain the ethylene vinyl acetal.

The catalyst for carrying out the acetalization reaction is not particularly limited, and any organic acid or inorganic acid may be used. Examples thereof include acetic acid, para toluenesulfonic acid, nitric acid, sulfuric acid, hydrochloric acid, carbonic acid, and the like.

Although there is no particular limitation on the degree of saponification of the acetate groups, it is preferably 95 mol% or more, more preferably 98 mol% or more, still more preferably 99 mol% or more, and most preferably 99.9 mol% or more.

Preferably, the percentage of ethylene units in the ethylene vinyl acetal is 30 to 55 mol%, and more preferably 35 to 50 mol%. Also preferably, the percentage of ethylene units in the ethylene vinyl acetal is from 50 to 60 mol%.

Preferably, the acetal groups individually have 1 to 7 carbon atoms, i.e. they derive from the condensation reaction with aldehydes with 1 to 7 carbon atoms. More preferably, they derive from the list consisting of methanal (formaldehyde), acetaldehyde, n-propanal (propionaldehyde), n-butanal (butyraldehyde), iso-butanal (2-methyl-1-propanal, iso-butyraldehyde), n-pentanal (valeraldeyhde), iso-pentanal (3-methyl-1-butanal), sec-pentanal (2-methyl-1-butanal), tert-pentanal (2,2,dimethyl-1-propanal), n-hexanal (capronaldehyde), iso-hexanal (2-methyl-1-pentanal, 3-methyl-1-pentanal, 4-methyl-1-pentanal), 2,2-dimethyl-1-butanal, 2,3-dimethyl-1-butanal, 3,3-dimethyl-1-butanal, 2-ethyl-1-butanal, n-heptanal, 2-methyl-1-hexanal, 3-methyl-1-hexanal, 4-methyl-1-hexanal, 5-methyl-1-hexanal, 2,2-dimethyl-1-pentanal, 3,3-dimethyl-1-pentanal, 4,4-dimethyl-1-pentanal, 2,3-dimethyl-1-pentanal, 2,4-dimethyl-1-pentanal, 3,4-dimethyl-1-pentanal, 2-ethyl-1-pentanal, 2-ethyl-2-methyl-1-butanal, 2-ethyl-3-methyl-1-butanal, 3-ethyl-2-methyl-1-butanal, cyclohexylaldehyde and benzaldehyde. Most preferably, they derive from the condensation reaction with iso-butyraldehyde, acetaldehyde and/or n-butyraldehyde.

Also preferably, the ethylene vinyl acetals according to the present invention are mixed acetals, i.e. they comprise at least two different acetal groups. In other words, the ethylene vinyl acetals as used in the invention comprise a first acetal group derived from the reaction of two hydroxyl groups of the respective ethylene vinyl alcohol with one aldehyde and at least a second acetal group derived from the reaction of two other hydroxyl groups of the respective ethylene vinyl alcohol with a second aldehyde, wherein the first aldehyde is different from the second aldehyde. The preferred aldehydes are the same as used for the acetals with one acetal group as listed above; the most preferable combination is a mixture of acetals derived from acetaldehyde and n-butyraldehyde.

Although there is no particular limitation to the method for producing the ethylene vinyl acetals used in this embodiment of the present invention, they can be produced by a method in which an aldehyde is added to an ethylene vinyl alcohol solution under acidic conditions and subjected to an acetalization reaction.

Preferably, the degree of acetalization of the ethylene vinyl acetal used in the present invention is 5 mol% or more and less than 40 mol%, more preferably the lower limit of the degree of acetalization is more than 6 mol%, more than 7 mol%, more than 8 mol%, more than 9 mol%, and most preferably more than 10 mol%. Further, the upper limit of the degree of acetalization is more preferably 38 mol% or less, 36 mol% or less, 34 mol% or less, and 32 mol% or less in this order, and most preferably less than 30 mol%.

Preferably, the percentage of vinyl alcohol units in the ethylene vinyl acetal resin of the present invention is 24 to 71 mol% based on the total monomer unit constituting the resin.

The vinyl alcohol content and vinyl acetate content of ethylene vinyl acetals were determined in accordance with DIN ISO 3681 (acetate content) and DIN ISO 53240 (PVA content). The vinyl acetal content is calculated as the remaining portion from the sum of vinyl alcohol content and vinyl acetate content determined in accordance with DIN ISO 53401/53240 and the ethylene needed to make one hundred. The degree of acetalization is calculated from the amount of vinyl acetal content divided by the sum of vinyl alcohol content, vinyl acetal content and vinyl acetate content. Conversion from % by weight into mol % is achieved by formulas known to the person skilled in the art.

The ethylene content of the ethylene vinyl acetate copolymer is measured by NMR spectroscopy. First, the ethylene vinyl acetal resin is dissolved in ethanol and a 2 N hydrochloride hydroxylamine solution and hydrochloric acid are added, and the mixture is stirred under reflux with a condenser in a water bath for 4 hours, and after cooling, ammonia water is added. Afterwards, methanol is added and the polymer is precipitated, washed and dried to obtain the acetylated ethylene vinyl alcohol copolymer. Then, the acetylated ethylene vinyl alcohol copolymer is dissolved in DMSO (dimethyl sulfoxide) at 120 °C, cooled to room temperature, and then N,N-dimethyl-4-aminopyridine and acetic anhydride are added thereto, followed by stirring for 1 h, followed by precipitation with ion-exchanged water and acetone, and drying to obtain an ethylene vinyl acetate copolymer. The polymer is dissolved in DMSO-d6 and measured by a proton NMR spectrometer of 400 MHz The spectrum obtained was integrated 256 times. The molar ratio of the ethylene units of the ethylene vinyl alcohol copolymer is calculated from the intensity ratio of the methine proton (peak of 1.1 to 1.9 ppm) derived from the ethylene unit and the vinyl acetate unit, and the terminal methyl proton (peak of 2.0ppm) derived from the vinyl acetate unit. Note that, since the ethylene unit is not affected by the acetalization reaction, the molar ratio (n) of the ethylene unit of the ethylene vinyl alcohol copolymer before the acetalization reaction is equal to the molar ratio (n) of the ethylene unit of the ethylene vinyl acetal resin obtained after the acetalization reaction.

In a second aspect, the present invention concerns a suspension composition comprising one or more inorganic pigments, one or more organic solvents, one or more binders, one or more plasticizers, and one or more dispersing agents, wherein the binder is an ethylene vinyl acetal comprising ethylene units in the range of 25 to 60 mol%.

Preferably, the acetal group has 2 to 7 carbon atoms and is derived from the same aldehyde(s) as described above. Most preferably, the ethylene vinyl acetal comprises n-butyraldehyde and/or acetaldehyde acetal groups.

The inorganic pigments can be chosen from finely ground granules of paraelectric or ferroelectric raw materials and include titanium dioxide (rutile), preferably modified by additives of zinc, zirconium, niobium, magnesium, tantalum, cobalt and/or strontium, as well as compounds chosen from MgNb₂O₆, ZnNb₂O₆, MgTa₂O₆, ZnTa₂O₆, (ZnMg)TiO₃, (ZrSn)TiO₄ and Ba₂Ti₉O₂₀ or BaTiO₃ (Barium titanate). The average particle diameter of the inorganic pigments is preferably about 0.01 to 1 µm.

The organic solvent may be chosen from aromatic compounds, such as toluene and xylene, and alcohol compounds, such as ethyl alcohol, isopropyl alcohol and butyl alcohol and more preferably, mixtures thereof.

Suitable dispersing agents include fish oil, phosphoric acid esters and functional polymers comprising polyoxyalkylene groups on side chain, such as the MALIALIM^{™} series commercially available from NOF America Cooperation.

In addition to the binder according to the present invention, the suspension may comprise other components chosen inter alia from other binders like cellulose resins, acrylic resins, vinyl acetate resins, polyvinyl alcohol resins; plasticizers such as polyethylene glycol or phthalic esters, and/or a defoamer.

The method to produce the suspension composition is not specifically limited. Various dispersing methods may be used, for example, a method of using a mediatype mill, such as a bead mill, a ball mill, an attritor, a paint shaker and a sand mill; a method of kneading a powdered ceramic, a dispersing medium, a dispersing agent, a binder, a plasticizer and the like; and a method of using a three-roll mill. Using a three-roll mill, the method includes dispersing a powdered inorganic pigment in an organic solvent (mixture) together with a dispersing agent, a binder, a plasticizer, and the like.

Preferably, the powdered ceramic, dispersing agent, and solvent (mixture) are premixed and dispersed so that the dispersing agent is adsorbed on the powdered ceramic. In a second step, the binder is added to the mixture thus formed, and subsequently, mixing and dispersing is performed again.

The thickness of the coating film produced by these processes can be 0.25 to 25 µm, and typically, 0.5 to 10 µm.

### Examples

### Example 1 - ethylene vinyl acetal

100 parts by weight of the ethylene vinyl alcohol copolymer synthesized according to the process described in Japanese Patent Application Laid-Open No. 2016-28139 were dispersed in 315 parts by weight of 1-propanol containing 44 mol% of ethylene units (saponification degree: 99%) and the temperature of the solution was raised to 60 °C with agitation. Afterwards, 40 parts by weight of 1 M hydrochloric acid was added, followed by 34.2 parts by weight of n-butyraldehyde while maintaining the temperature at 60 °C. As the reaction proceeded, the ethylene vinyl alcohol copolymer dissolved and the reaction mixture became a homogeneous solution. After 36 hours, 6.4 parts by weight of sodium hydrogen carbonate was added to stop the reaction. After adding 500 parts by weight of 1-propanol to the reaction solution to make it uniform, it was added dropwise to 2000 parts by weight of water to precipitate a resin. Thereafter, the operation of filtration and washing with water was repeated three times, the resulting solid was vacuum dried at 60 °C for 8 hours. The ethylene vinyl acetal thus obtained has a content of ethylene units of 44 mol% and an degree of acetalization of 46 mol%.

### Comparative Example 1 - n-butyl acetal

Mowital^{®} polyvinyl acetal resin B 75 H obtained from Kuraray Europe GmbH, which contains acetal units prepared from n-butyraldehyde and a polyvinyl alcohol with no ethylene units in the polymer chain, is used to prepare a PVB solution. The PVB solution is used a binder solution to prepare a ceramic green sheet. Details on the description for the green sheet preparation is in the following section.

### Preparation of inorganic dispersion

1.3 g of a polyoxyalkylene dispersing agent (MALIALIM^{™} series, name: SC-0505K, supplier: NOF) was added to a mixed solvent of 25 g of toluene and 25 g of ethanol and dissolved by stirring. Next, 130 g of barium titanate powder (manufactured by Fuji Titanium Industry, UQBT-20) and 500 g of ZrO₂ beads (diameter: 2 mm) were added to the obtained solution. The organic dispersion was mixed for 6-8 hours on a roller mixer.

### Preparation of resin solution

A resin solution was prepared by adding 10.4 g of the (polyvinyl) acetal resin and 3.95 g of the plasticizer 3G8 to a mixed solvent of 59.8 g of ethanol and 59.8 g of toluene. Mixture is stirred to dissolve the resin.

### Ceramic green sheet production

The resin solution was added to the obtained inorganic dispersion and mixed using a roller block mixer for 10 h to obtain a composition for a ceramic green sheet.

The ZrO₂-beads were separated from the dispersion using a nylon screen/filter.

The obtained dispersion was degassed and casted according to the doctor blade process using an automized film application machine. A siliconized PET (Hostaphan^{®} RN 2 SLK, thickness 75 µm) was used as casting support. After casting, the film was dried in the air for 24 h (temperature: 23 °C, relative humidity: 50%) and subsequently drawn off.

The films obtained had a thickness of 15 µm and exhibited to cracks, blisters or defects during optical assessment.

From the green sheets concerned, suitable tensile specimens in the form of a so-called "dog bones" were punched out. 8 tensile specimens per type of film were punched out cross to the direction of casting and inspected by human eye. The 4 specimen which appeared to have the least flaws from the punching process were selected for measurement for both example 1 and comparable example 1. A universal tensile test machine was used for tensile force measurement. The measurements were carried under controlled conditions, being 23 °C and 50% relative humidity in accordance with DIN EN ISO 527-1 and DIN EN ISO 527-3.

**Table 1: Results of the tensile test**

| **Sample** | **Elongation at Break [%]** |
|---|---|
| **ethylene vinyl acetal - Example 1** | |
| Sample 1 | 6.8 |
| Sample 2 | 7.6 |
| Sample 3 | 6.8 |
| Sample 4 | 7.0 |
| **Average value** | **7.1** |
| | |

| **PVB (Mowital^{®} B 75 H) - Comparable Example 1** | |
|---|---|
| Sample 1 | 3.9 |
| Sample 2 | 2.7 |
| Sample 3 | 3.3 |
| Sample 4 | 2.3 |
| **Average value** | **3.1** |

The results of the tensile test show that the ceramic green sheets obtained with the ethylene vinyl acetal have a value for the elongation at break of more than double of that obtained with the PVB standard.

## Claims

1. Use of an ethylene vinyl acetal as a binder for the production of a ceramic green sheet or a ceramic moulded body wherein the ethylene vinyl acetal comprises ethylene units in the range of 25 to 60 mol%.

2. The use according to claim 1 wherein the acetal group has 2 to 7 carbon atoms.

3. The use according to claim 1 or 2 wherein the ethylene vinyl acetal comprises n-butyraldehyde and/or iso-butyraldehyde acetal groups.

4. The use according to any one of claims 1 to 3 wherein the residual vinyl alcohol in the ethylene vinyl acetals is 15 to 40 mol%.

5. A suspension composition comprising one or more inorganic pigments, one or more organic solvents, one or more binders, one or more plasticizers, and one or more dispersing agents, wherein the binder is an ethylene vinyl acetal comprising ethylene units in the range of 25 to 60 mol%.

6. The suspension according to claim 5 wherein the acetal group has 2 to 7 carbon atoms.

7. The suspension according to claim 5 or 6 wherein the ethylene vinyl acetal comprises n-butyraldehyde and/or acetaldehyde acetal groups.

8. A process for the production of a ceramic green sheet or a ceramic moulded body using the suspension according to any one of claims 5 to 7.
